# DEMANDE DE BREVET EUROPEEN

(11) **EP 1 351 352 A1**
(43) Date de publication de la demande: **08.10.2003**
(21) Numéro de dépôt: 03290673.7
(22) Date de dépôt: 18.03.2003
(51) Int. Cl.: H01S 3/30

(54) **Procédé perfectionné d'amplification raman distribuée dans une fibre optique**

(30) Priorité: 02.04.2002 FR 0204082
(71) Demandeur: ALCATEL, 75008 Paris (FR)
(72) Inventeur: Le Roux, Patrice, 91140 Villebon sur Yvette (FR); Boubal, François, 91170 Viry-Chatillon (FR); Brandon, Eric, 75015 Paris (FR)
(74) Mandataire: Lamoureux, Bernard

(57) **Abrégé**

Un procédé est destiné à l'amplification optique de signaux entre des stations d'émission (1) et de réception (3) raccordées par une fibre optique (2). On procède, d'une part, à l'amplification dans la fibre, par diffusion Raman stimulée de premier ordre, de la puissance d'un signal optique primaire ([λa - λb]) circulant de la station d'émission (1) vers la station de réception (3), à l'aide de premier et deuxième signaux optiques secondaires, de pompe, modulés, présentant des première (λ2) et seconde (λ3) longueurs d'onde et circulant de la station de réception (3) vers la station d'émission (1), et d'autre part, à la transmission dans la fibre (2), entre la station de réception (3) et la station d'émission (1), d'au moins un premier signal optique tertiaire présentant une troisième longueur d'onde (λ1) propre à amplifier la puissance des premier et deuxième signaux secondaires par diffusion Raman stimulée de second ordre.

## Description

L'invention concerne le domaine de la transmission de signaux optiques, et plus particulièrement celui de l'amplification par effet Raman de signaux circulant dans une fibre.

Lorsque des signaux optiques (primaires) circulent dans une fibre optique, entre des stations d'émission et de réception distantes, ils doivent généralement faire l'objet d'une amplification in situ. L'une des techniques utilisées pour effectuer cette amplification est connue sous le nom de diffusion Raman stimulée de premier ordre (ou « first order SRS »). Il s'agit en fait de faire circuler dans la fibre, entre les stations d'émission et de réception (selon un mode co-propagatif ou contra-propagatif par rapport aux signaux primaires), des premier et deuxième signaux optiques (secondaires) présentant des première et seconde longueurs d'onde inférieures à celles des signaux primaires et de nature à induire, par diffusion Raman stimulée de premier ordre, la conversion d'une partie de leur puissance (ou « puissance de pompe ») au profit des signaux primaires.

Lorsque deux signaux secondaires sont ainsi utilisés dans une fibre optique, ils peuvent amplifier des signaux primaires dont les longueurs d'onde sont comprises dans un intervalle d'environ 30 nanomètres (nm). Or, l'efficacité de l'amplification Raman distribuée sur toute la longueur de la fibre est notablement réduite, d'une part, en raison de l'atténuation intrinsèque des fibres (plus particulièrement aux longueurs d'ondes des signaux secondaires) qui diminue la distance d'interaction entre les signaux secondaires et les signaux primaires, et d'autre part, en raison de la diffusion Raman stimulée entre les premier et deuxième signaux secondaires qui vide (ou « déplète ») les niveaux d'énergie associés aux petites longueurs d'onde au profit des niveaux d'énergie associés aux grandes longueurs d'onde.

L'invention a donc pour but de remédier à cet inconvénient.

Elle propose à cet effet un procédé d'amplification optique de signaux entre des stations d'émission et de réception raccordées par une fibre optique, dans lequel on procède à l'amplification dans la fibre, par diffusion Raman stimulée de premier ordre, de la puissance d'un signal optique primaire circulant entre les stations d'émission et de réception, à l'aide de premier et deuxième signaux optiques secondaires, de pompe, modulés, présentant des première et seconde longueurs d'onde, circulant de préférence à contre-courant des signaux primaires, et eux-mêmes amplifiés, par diffusion Raman stimulée de second ordre, par au moins un premier signal optique tertiaire présentant une troisième longueur d'onde et circulant soit à contre-courant des signaux primaires, soit dans le même sens qu'eux.

Les signaux secondaires étant amplifiés par le signal tertiaire et n'interagissant presque plus entre eux, voire plus du tout, du fait de la modulation, ils peuvent alors amplifier les signaux primaires de façon beaucoup plus efficace.

La modulation des premier et deuxième signaux optiques secondaires peut porter sur leurs puissances respectives ou sur leurs longueurs d'onde respectives, selon une fréquence choisie (de préférence, de l'ordre d'environ 10 MHz). Dans le cas de la modulation de puissance on peut notamment mettre alternativement à une valeur sensiblement nulle les puissances des premier et deuxième signaux secondaires.

Par ailleurs, et notamment lorsque les signaux primaires à transmettre sont répartis sur une large bande de longueurs d'onde, on peut utiliser trois ou quatre signaux optiques secondaires différents, voire plus encore, pour procéder à l'amplification desdits signaux primaires par diffusion Raman stimulée de premier ordre. Dans cette situation, il est alors préférable d'utiliser deux ou trois signaux optiques tertiaires, voire plus, pour amplifier la puissance des différents signaux secondaires par diffusion Raman stimulée de second ordre.

L'invention porte également sur un dispositif d'amplification de signaux optiques, comprenant un module d'amplification susceptible d'être raccordé à une fibre optique dans laquelle circulent des signaux optiques primaires et capable de délivrer dans cette fibre optique, de préférence à contre-courant des signaux primaires, des premier et deuxième signaux optiques secondaires, de pompe, présentant des première et seconde longueurs d'onde propres à amplifier, par diffusion Raman stimulée de premier ordre, la puissance des signaux optiques primaires circulant dans la fibre optique.

Le dispositif se caractérise par le fait que son module d'amplification comporte des moyens de commande, capables de moduler les premier et deuxième signaux secondaires, et des moyens d'émission pouvant délivrer dans la fibre optique, soit à contre-courant des signaux primaires, soit dans le même sens qu'eux, au moins un premier signal optique tertiaire présentant une troisième longueur d'onde propre à amplifier la puissance des premier et deuxième signaux secondaires par diffusion Raman stimulée de second ordre.

Les moyens de commande sont agencés pour moduler la puissance ou les longueurs d'onde des premier et deuxième signaux secondaires, selon une fréquence choisie.

Par ailleurs, le module d'amplification peut être agencé de manière à délivrer dans la fibre, de préférence à contre-courant des signaux primaires, au moins un troisième signal secondaire, de pompe, présentant une quatrième longueur d'onde et propre à amplifier la puissance des signaux primaires, par diffusion Raman stimulée de premier ordre. Dans ce cas, il est avantageux que les moyens d'émission soient agencés de manière à délivrer dans la fibre, soit à contre-courant des signaux primaires, soit dans le même sens qu'eux, au moins un second signal optique tertiaire présentant une cinquième longueur d'onde et propre à amplifier la puissance d'au moins le troisième signal secondaire par diffusion Raman stimulée de second ordre.

L'invention porte en outre sur une station d'émission équipée du dispositif précité, et sur une station de réception équipée du dispositif précité. Le dispositif selon l'invention peut également être réparti entre les stations d'émission et de réception de sorte que les signaux secondaires soient contra-propagatifs et les signaux tertiaires co-propagatifs.

Le procédé, le dispositif et les stations d'émission et de réception selon l'invention trouvent une application particulièrement intéressante, bien que non exclusive, dans le domaine des télécommunications, et plus particulièrement encore dans le domaine des systèmes de transmission avec ou sans amplificateur optique (comme par exemple un répéteur).

D'autres caractéristiques et avantages de l'invention apparaîtront à l'examen de la description détaillée ci-après, et des dessins annexés, sur lesquels :
- la figure 1 illustre de façon schématique une partie d'une installation de transmission de signaux primaires, équipée de moyens permettant de mettre en oeuvre le procédé d'amplification optique selon l'invention,
- la figure 2 illustre de façon schématique le mécanisme d'amplification optique selon l'invention,
- les figures 3A et 3B sont des diagrammes illustrant de façon schématique un exemple de modulation de puissance (P) en fonction du temps (t) pour les premier (λ2) et second (λ3) signaux secondaires de pompe.

Les dessins annexés sont, pour l'essentiel, de caractère certain. En conséquence, ils pourront non seulement servir à compléter l'invention, mais aussi contribuer à sa définition, le cas échéant.

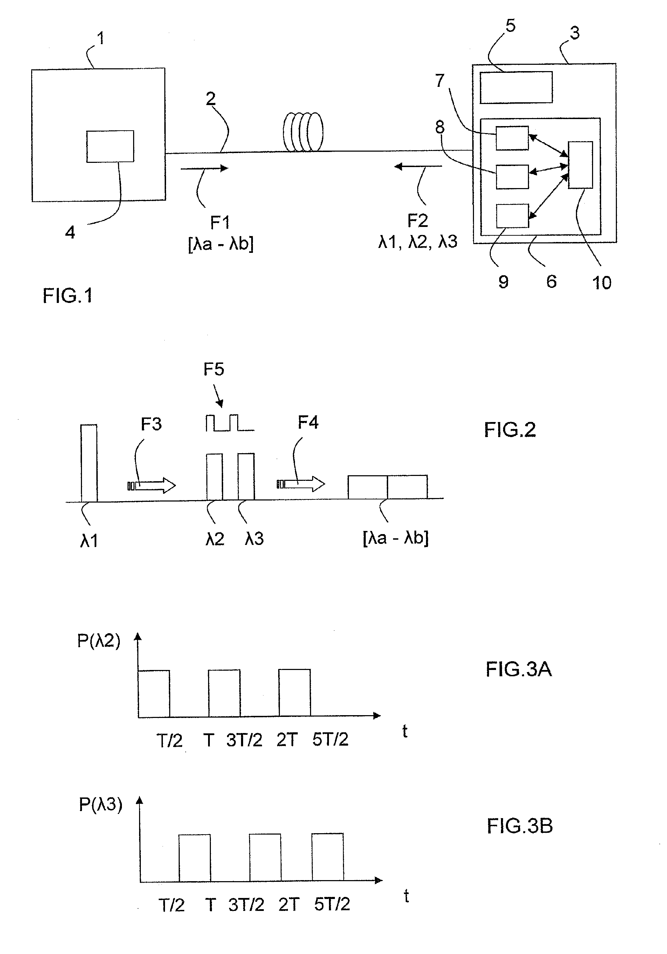

On se réfère tout d'abord à la figure 1 pour décrire une partie d'une installation de transmission de signaux primaires, équipée de moyens permettant de mettre en oeuvre le procédé d'amplification optique selon l'invention.

L'installation ici représentée comporte une station de transmission de données 1, raccordée, via une fibre optique 2, à une station de réception de données 3, distante.

Dans cet exemple, la fibre optique 2 n'est pas équipée de dispositif d'amplification optique, tel qu'un répéteur ou un régénérateur de signal (par exemple de type 3R), mais l'invention s'applique également aux fibres équipées de tels dispositifs. Une telle installation peut être, par exemple, utilisée dans le cadre de transmissions sous-marines ou terrestres.

La station de transmission 1 comporte un module de transmission 4 capable de délivrer à la fibre optique 2 des données à transmettre sous la forme de signaux optiques dits primaires, présentant des longueurs d'onde comprises dans un intervalle choisi [λa - λb]. Par exemple, les signaux primaires émis sont compris dans l'intervalle [1530 nm- 1562 nm].

Une fois émis par le module de transmission 4, les signaux primaires se propagent dans la fibre optique 2 en direction de la station de réception 3 (flèche F1), qui possède un module de réception 5 pour analyser les signaux primaires reçus en vue de leur utilisation ou de leur relais vers une ou plusieurs autres stations de l'installation.

En raison de la distance, souvent importante, qui sépare les stations d'émission 1 et de réception 3, il est nécessaire d'amplifier les signaux primaires, si possible de façon homogène sur toute la longueur de la fibre optique 2 (on parle alors d'amplification distribuée).

Pour atteindre cet objectif, l'invention prévoit un dispositif d'amplification de signaux. Dans l'exemple illustré, ce dispositif d'amplification est implanté dans la station de réception, mais dans une variante, il pourrait être implanté dans la station d'émission. Dans une autre variante, on pourrait envisager qu'une partie du dispositif soit implantée dans la station d'émission (pour l'émission des signaux tertiaires) tandis que l'autre partie est implantée dans la station de réception (pour l'émission des signaux secondaires).

Le dispositif d'amplification comporte un module d'amplification 6 comprenant trois sous-modules 7, 8 et 9.

Le premier sous-module 7 est agencé pour délivrer des signaux optiques dits « tertiaires », présentant une longueur d'onde λ1 inférieure aux longueurs d'onde [λa - λb] des signaux primaires.

Le deuxième sous-module 8 est agencé pour délivrer des premiers signaux optiques dits « secondaires », présentant une longueur d'onde λ2 inférieure aux longueurs d'onde [λa - λb] des signaux primaires, mais supérieure à celle (λ1) des signaux tertiaires.

Le troisième sous-module 9 est agencé pour délivrer des deuxièmes signaux optiques dits « secondaires », présentant une longueur d'onde λ3 inférieure aux longueurs d'onde [λa - λb] des signaux primaires, mais supérieure à celle (λ1) des signaux tertiaires et à celle (λ2) des premiers signaux secondaires.

La longueur d'onde λ1 est choisie de manière à optimiser le couplage entre les signaux tertiaires et les premiers et seconds signaux secondaires, comme illustré sur la figure 2 (flèche F3). On entend ici par « optimiser le couplage », le fait d'induire une amplification optimale de la puissance des signaux secondaires par diffusion Raman stimulée de second ordre. En fait, l'amplification Raman de second ordre permet une distribution plus homogène des signaux secondaires sur toute la longueur de la fibre, et dans le même temps une distribution plus homogène du bruit (ou ASE pour Amplified Spontaneous Emission) sur toute la longueur de la fibre, ce qui permet d'améliorer localement le rapport signal/bruit. Ce mécanisme d'amplification de second ordre est notamment décrit dans le document de L.Labrunie et al « 1.6 Tbits/s (160x10 Gbits/s) unrepeatered transmission over 321 km using second order pumping Raman amplification », post-deadline paper OAA'01, et dans le document de Rottwitt et al « Transparent 80 km bi-directionnally pumped distributed Raman amplifier with second order pumping », ECOC 99, regular paper Vol II, proceedings, p.144-145.

Les signaux secondaires étant désormais amplifiés par des signaux tertiaires, on peut donc utiliser dans les second 8 et troisième 9 sous-modules des lasers de pompe de plus faible puissance pour générer les signaux secondaires.

Par ailleurs, les longueurs d'onde λ2 et λ3 sont choisies de manière à optimiser le couplage entre les signaux secondaires et les signaux primaires, comme illustré sur la figure 2 (flèche F4). On entend ici par « optimiser le couplage », le fait d'induire une amplification optimale de la puissance des signaux secondaires par diffusion Raman stimulée de premier ordre. Ce mécanisme d'amplification de premier ordre est notamment décrit dans le document de Aoki « Properties of fiber Raman amplifier and their applicability to digital optical communication systems », Journal of lightwave technology, july 1988, Vol 6, n°7.

A titre d'exemple, lorsque les longueurs d'onde [λa - λb] des signaux primaires sont sensiblement comprises dans l'intervalle [1530 nm - 1562 nm], on peut choisir des signaux secondaires présentant des longueurs d'onde λ2 et λ3 respectivement égales à environ 1425 nm et 1455 nm, et des signaux tertiaires présentant une longueur d'onde λ1 égale à environ 1360 nm.

Les trois sous-modules 7, 8 et 9 sont pilotés par un module de commande 10 que comprend le module d'amplification 6. Celui-ci gère l'injection des signaux secondaires et tertiaires dans la fibre optique 2. Ici, l'injection s'effectue à contre courant des signaux primaires (mode contra-propagatif - flèche F2 de la figure 1) du fait que le dispositif d'amplification selon l'invention est implanté dans la station de réception 3. Mais, s'il était implanté dans la station d'émission 1, l'injection s'effectuerait dans le même sens que les signaux primaires (mode co-propagatif). Il pourrait être également constitué de deux parties, l'une implantée dans la station de réception (pour l'émission des signaux secondaires - mode contra-popagatif), l'autre implantée dans la station d'émission (émission des signaux tertiaires - mode co-propagatif).

Afin de limiter, voire interdire, le dépeuplement (ou déplétion) des niveaux d'énergie élevés, associés à la longueur d'onde λ2, au profit des niveaux d'énergie moins élevés, associés à la longueur d'onde λ3, lequel réduit notablement l'efficacité de l'amplification des premiers signaux, induite par les premiers et les deuxièmes signaux secondaires par diffusion Raman stimulée de premier ordre, on procède à la modulation de ces premier et deuxième signaux secondaires.

La modulation des premiers et deuxièmes signaux secondaires, délivrés par les seconds 8 et troisièmes 9 sous-modules, est contrôlée par le module de commande 10.

La fréquence de la modulation est choisie de manière à obtenir une amplification distribuée de façon homogène sur la longueur de la fibre optique 2, compte tenu des longueurs d'ondes choisies pour les signaux primaires, secondaires et tertiaires. Ainsi, pour les longueurs d'onde présentées à titre d'exemple ci-dessus, la fréquence de la modulation est de préférence de l'ordre d'environ 10 MHz. Cette fréquence est préférentielle, mais d'autres peuvent être envisagées, par exemple environ 1 MHz ou environ 100 MHz.

Deux types de modulation sont préférentiellement envisagés. Un premier type, illustré sur les figures 3A et 3B et matérialisé par la flèche F5 sur la figure 2, concerne la modulation des puissances respectives des premiers et seconds signaux secondaires.

Par exemple, sur une période T, le module de commande 10 peut autoriser le deuxième sous-module 8, pendant la première demie-période (de 0 à T/2), à délivrer ses premiers signaux secondaires (λ2) sous une puissance maximale pendant qu'il interdit au troisième sous-module 9 de délivrer ses deuxièmes signaux secondaires (λ3), et dans la seconde demie-période (de T/2 à T) c'est l'inverse, le troisième sous-module 9 étant autorisé par le module de commande 10 à délivrer ses deuxièmes signaux secondaires (λ3) sous une puissance maximale, pendant que le deuxième sous-module 8 est interdit de délivrer ses premiers signaux secondaires.

Bien entendu, il ne s'agit là que d'un exemple de modulation de puissance. On pourrait notamment envisager que les modulations respectives des premier et deuxième signaux secondaires se chevauchent légèrement, ou bien que la puissance de l'un des signaux secondaires ne soit pas totalement nulle pendant que celle de l'autre signal secondaire est à son maximum.

Un second type, non illustré, concerne la modulation des longueurs d'onde respectives des premiers et seconds signaux secondaires. Dans ce cas, le deuxième sous-module 8 peut suffire, dès lors qu'il est équipé d'un laser pouvant délivrer des photons sur un intervalle de longueurs d'onde choisi, par exemple entre 1425 nm et 1455 nm. La modulation de la longueur d'onde des signaux secondaires s'effectue alors par un balayage périodique de l'intervalle de longueurs d'onde du laser « secondaire » du sous-module 8, piloté par le module de commande 10, ce qui assure que les différents signaux secondaires n'interagissent plus les uns avec les autres.

Bien entendu, il ne s'agit là que d'un exemple de modulation de longueur d'onde.

Des schémas de modulation plus complexes peuvent être envisagés, notamment lorsque l'on utilise plus de deux deuxièmes signaux secondaires, par exemple trois ou quatre, pour amplifier les signaux primaires. Dans ce cas, il est d'ailleurs préférable, comme indiqué précédemment, d'utiliser plus d'un signal tertiaire pour amplifier les signaux secondaires, par exemple deux ou trois.

Par exemple, on peut équiper les deuxième 8 et troisième 9 sous-modules de lasers capables d'émettre des photons de deux longueurs d'onde différentes (λ2-1 et λ2-2, ou λ3-1 et λ3-2) pour obtenir une amplification Raman, de premier ordre, de signaux primaires large bande, à l'aide de quatre signaux secondaires différents.

Dans ce cas, un premier mode de fonctionnement peut porter sur un rapport cyclique de type « ½ », lorsque le sous-module 8 émet des photons selon deux longueurs d'onde rapprochées, tout comme le sous-module 9. Il est en effet possible de laisser coexister des signaux secondaires possédant des longueurs d'onde voisines, étant donné que seules sont nuisibles les interactions entre photons « secondaires » présentant des longueurs d'onde éloignées. Dans ce cas, le module de commande 10 autorise tour à tour les deux sous-modules 8 et 9 à émettre leurs deux signaux secondaires.

Un second mode de fonctionnement peut porter sur un rapport cyclique de type « ¼ » au lieu de « ½ », de sorte qu'à aucun moment les différentes longueurs d'onde ne se voient. Ce mode de fonctionnement peut éventuellement nécessiter des puissances laser de pompe supérieures.

L'invention offre également un procédé d'amplification optique de signaux entre une station d'émission 1 et une station de réception 3 raccordées par une fibre optique 2.

Ce procédé peut être mis en oeuvre à l'aide de l'installation présentée ci-avant ou du dispositif d'amplification, qu'il soit implanté dans une station de réception ou dans une station d'émission. Les fonctions et sous-fonctions principales et optionnelles assurées par les étapes de ce procédé étant sensiblement identiques à celles assurées par les différents moyens constituants la station, seules seront résumées ci-après les étapes mettant en oeuvre les fonctions principales du procédé selon l'invention.

Ce procédé consiste à amplifier dans la fibre optique (in situ), par diffusion Raman stimulée de premier ordre, la puissance d'un signal optique primaire circulant entre les stations d'émission 1 et de réception 3, à l'aide de premier et deuxième signaux optiques secondaires, de pompe, modulés, présentant des première λ2 et seconde λ3 longueurs d'onde, circulant de préférence à contre-courant des signaux primaires, et eux-mêmes amplifiés, par diffusion Raman stimulée de second ordre, par au moins un premier signal optique tertiaire λ1 présentant une troisième longueur d'onde et circulant soit à contre-courant des signaux primaires, soit dans le même sens qu'eux.

Grâce au procédé et au dispositif d'amplification selon l'invention, il est notamment possible d'utiliser un laser de pompe de forte ou très forte puissance, pour délivrer les signaux tertiaires (λ1) destinés à l'amplification de second ordre, et des lasers de pompe de faible ou très faible puissance, pour délivrer les signaux secondaires (λ2 et λ3) destinés à l'amplification de premier ordre des signaux primaires. Le procédé selon l'invention permet, par conséquent d'améliorer notablement l'efficacité de l'amplification par diffusion Raman stimulée, ainsi qu'éventuellement de réduire les coûts des modules d'amplification implantés dans les stations.

L'invention ne se limite pas aux modes de réalisation de procédé et de station décrits ci-avant, seulement à titre d'exemple, mais elle englobe toutes les variantes que pourra envisager l'homme de l'art dans le cadre des revendications ci-après.

## Revendications

1. Procédé d'amplification optique de signaux entre une station d'émission (1) et une station de réception (3) raccordées par une fibre optique (2), dans lequel on procède à l'amplification dans la fibre, par diffusion Raman stimulée de premier ordre, de la puissance d'un signal optique primaire ([λa - λb]) circulant entre lesdites stations d'émission (1) et de réception (3), par des premier et deuxième signaux optiques secondaires, de pompe, présentant des première (λ2) et seconde (λ3) longueurs d'onde et circulant entre lesdites stations d'émission (1) et de réception (3), **caractérisé en ce que** l'on procède en outre, d'une part, à la modulation desdits premier (λ2) et deuxième (λ3) signaux secondaires, et d'autre part, à la transmission dans ladite fibre (2), entre lesdites stations d'émission (1) et de réception (3), d'au moins un premier signal optique tertiaire présentant une troisième longueur d'onde (λ1) propre à amplifier la puissance des premier et deuxième signaux secondaires par diffusion Raman stimulée de second ordre.

2. Procédé selon la revendication 1, **caractérisé en ce que** l'on procède à une modulation de puissance desdits premier (λ2) et deuxième (λ3) signaux secondaires.

3. Procédé selon la revendication 2, **caractérisé en ce que** ladite modulation de puissance consiste à mettre sensiblement à la valeur zéro, de façon alternée selon une fréquence choisie, les puissances desdits premier (λ2) et deuxième (λ3) signaux secondaires.

4. Procédé selon la revendication 1, **caractérisé en ce que** l'on procède à une modulation des longueurs d'onde desdits premier (λ2) et deuxième (λ3) signaux secondaires, selon une fréquence choisie.

5. Procédé selon l'une des revendications 3 et 4, **caractérisé en ce que** ladite fréquence est sensiblement de l'ordre de 10 MHz.

6. Procédé selon l'une des revendications 1 à 5, **caractérisé en ce qu'**on procède à l'amplification, par diffusion Raman stimulée de premier ordre, de la puissance dudit signal optique primaire ([λa - λb]), par lesdits premier (λ2) et deuxième (λ3) signaux optiques secondaires et au moins un troisième signal secondaire, de pompe, présentant une quatrième longueur d'onde et circulant entre lesdites stations d'émission (1) et de réception (3).

7. Procédé selon la revendication 6, **caractérisé en ce que** l'on procède à la transmission d'au moins un second signal optique tertiaire présentant une cinquième longueur d'onde propre à amplifier la puissance d'au moins ledit troisième signal secondaire par diffusion Raman stimulée de second ordre.

8. Procédé selon l'une des revendications 1 à 7, **caractérisé en ce que** lesdits signaux secondaires (λ2,λ3) circulent de la station de réception (3) vers la station d'émission (1).

9. Procédé selon l'une des revendications 1 à 8, **caractérisé en ce que** lesdits signaux tertiaires (λ1) circulent de la station de réception (3) vers la station d'émission (1).

10. Procédé selon l'une des revendications 1 à 8, **caractérisé en ce que** lesdits signaux tertiaires (λ1) circulent de la station d'émission (1) vers la station de réception (3).

11. Dispositif d'amplification de signaux optiques, comportant un module d'amplification (6) agencé pour délivrer dans une fibre optique (2) des premier et deuxième signaux optiques secondaires, de pompe, présentant des première (λ2) et seconde (λ3) longueurs d'onde propres à amplifier, par diffusion Raman stimulée de premier ordre, la puissance de signaux optiques primaires ([λa - λb]) circulant dans ladite fibre optique (2), **caractérisée en ce que** ledit module d'amplification (6) comporte des moyens de commande (10) agencés pour moduler lesdits premier (λ2) et deuxième (λ3) signaux secondaires, et des moyens d'émission (7) agencés pour délivrer dans ladite fibre (2) au moins un premier signal optique tertiaire présentant une troisième longueur d'onde (λ1) propre à amplifier la puissance des premier et deuxième signaux secondaires par diffusion Raman stimulée de second ordre.

12. Dispositif selon la revendication 11, **caractérisée en ce que** lesdits moyens de commande (10) sont agencés pour moduler la puissance desdits premier (λ2) et deuxième (λ3) signaux secondaires, selon une fréquence choisie.

13. Dispositif selon la revendication 11, **caractérisée en ce que** lesdits moyens de commande (10) sont agencés pour moduler les longueurs d'onde desdits premier (λ2) et deuxième (λ3) signaux secondaires, selon une fréquence choisie.

14. Dispositif selon l'une des revendications 11 à 13, **caractérisée en ce que** ledit module d'amplification (6) est agencé pour délivrer dans la fibre optique (2) au moins un troisième signal secondaire, de pompe, présentant une quatrième longueur d'onde et propre à amplifier la puissance desdits signaux primaires ([λa - λb]), par diffusion Raman stimulée de premier ordre.

15. Dispositif selon la revendication 14, **caractérisée en ce que** lesdits moyens d'émission (7) sont agencés pour délivrer dans la fibre optique (2) au moins un second signal optique tertiaire présentant une cinquième longueur d'onde et propre à amplifier la puissance d'au moins ledit troisième signal secondaire par diffusion Raman stimulée de second ordre.

16. Dispositif selon l'une des revendications 11 à 15, **caractérisé en ce que** ledit module d'amplification (6) est agencé pour délivrer dans la fibre optique (2) les signaux secondaires à contre-courant desdits signaux primaires.

17. Dispositif selon l'une des revendications 11 à 16, **caractérisé en ce que** ledit module d'amplification (6) est agencé pour délivrer dans la fibre optique (2) les signaux tertiaires à contre-courant desdits signaux primaires.

18. Dispositif selon l'une des revendications 11 à 16, **caractérisé en ce que** ledit module d'amplification (6) est agencé pour délivrer dans la fibre optique (2) les signaux tertiaires dans le sens desdits signaux primaires.

19. Station de réception de signaux optiques, comportant un module de réception (5) propre à être raccordé à une première extrémité de fibre optique (2) pour recevoir des signaux optiques primaires ([λa - λb]) issus d'une station d'émission (1) raccordée à une seconde extrémité de ladite fibre optique (2), **caractérisée en ce qu'**elle comporte un dispositif selon l'une des revendications 11 à 17, lesdits signaux secondaires et tertiaires circulant à contre-courant desdits signaux primaires.

20. Application du procédé, du dispositif et de la station de réception selon l'une des revendications précédentes à l'amplification Raman dans le domaine des télécommunications.

21. Application selon la revendication 20, **caractérisé en ce que** le domaine des télécommunications est celui des systèmes de transmission équipés de dispositifs d'amplification optique de signaux.

22. Application selon la revendication 20, **caractérisé en ce que** le domaine des télécommunications est celui des systèmes de transmission sans dispositif d'amplification optique de signaux.
